(19) Europäisches Patentamt / European Patent Office / Office européen des brevets

(11) **EP 1 144 957 B1**

(12) **EUROPÄISCHE PATENTSCHRIFT**

(45) Veröffentlichungstag und Bekanntmachung des Hinweises auf die Patenterteilung:
**17.03.2010   Patentblatt 2010/11**

(51) Int Cl.:
***G01F 1/00*** (2006.01)

(21) Anmeldenummer: **00979385.2**

(22) Anmeldetag: **25.09.2000**

(86) Internationale Anmeldenummer:
**PCT/DE2000/003334**

(87) Internationale Veröffentlichungsnummer:
**WO 2001/023843 (05.04.2001 Gazette 2001/14)**

(54) **SENSOR ZUR MESSUNG DER STRÖMUNGSGESCHWINDIGKEIT VON GASEN UND VERFAHREN ZU DESSEN HERSTELLUNG**

SENSOR FOR MEASURING FLOW VELOCITY IN GASES AND METHOD FOR THE PRODUCTION THEREOF

CAPTEUR DESTINE A MESURER LA VITESSE D'ECOULEMENT DE GAZ ET PROCEDE DE FABRICATION DUDIT CAPTEUR

(84) Benannte Vertragsstaaten:
**AT BE CH CY DE DK ES FI FR GB GR IE IT LI LU MC NL PT SE**

(30) Priorität: **28.09.1999   DE 19946533**

(43) Veröffentlichungstag der Anmeldung:
**17.10.2001   Patentblatt 2001/42**

(73) Patentinhaber: **FMP Technology GmbH Fluid Measurements & Projects 91058 Erlangen (DE)**

(72) Erfinder: **DURST, Franz 91095 Langensendelbach (DE)**

(74) Vertreter: **Gassner, Wolfgang Dr. Gassner & Partner Patentanwälte Marie-Curie-Strasse 1 91052 Erlangen (DE)**

(56) Entgegenhaltungen:
DE-A- 2 649 040     DE-A- 3 234 146
DE-A- 19 609 823     DE-A- 19 623 323
US-A- 4 335 616

- **MOSSE C A ET AL: "MICROPROCESSOR-BASED TIME-OF-FLIGHT RESPIROMETER" MEDICAL AND BIOLOGICAL ENGINEERING AND COMPUTING,GB,PETER PEREGRINUS LTD. STEVENAGE, Bd. 25, Nr. 1, 1987, Seiten 34-40, XP000004492 ISSN: 0140-0118**
- **PATENT ABSTRACTS OF JAPAN vol. 017, no. 283 (E-1373), 31. Mai 1993 (1993-05-31) & JP 05 013916 A (TOKYO GAS CO LTD;OTHERS: 01), 22. Januar 1993 (1993-01-22)**

Bemerkungen:
Derzeit sind die WIPO-Publikationsdaten A3 nicht verfügbar.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 144 957 B1

**Beschreibung**

Die Erfindung betrifft einen Sensor zur Messung der Strömungsgeschwindigkeit von Gasen sowie ein Verfahren zu dessen Herstellung.

Es ist z.B. aus der DE 32 34 146 A1, DE 196 23 323 A1 oder der DE 27 23 809 A1 bekannt, die Geschwindigkeit von Gasströmungen thermisch über die "Flugzeit" zu messen. Ein im Gasstrom angeordneter Sendedraht sendet ein periodisches Wärmesignal aus. Das Wärmesignal wird von der Strömung transportiert und nach einer "Flugzeit" von einem stromabwärts angeordneten Empfangsdraht erfaßt. Die "Flugzeit" bzw. die dazu proportionale Phasenverschiebung des vom Empfangsdraht erfaßten Heizsignals ist ein Maß für die Strömungsgeschwindigkeit.

Bei den "Flugzeit-Meßverfahren" wird davon ausgegangen, daß der Zusammenhang zwischen der Flugzeit $\Delta t$ und der Strömungsgeschwindigkeit U linear ist. Zur Berechnung der Strömungsgeschwindigkeit gilt die Beziehung

$$\Delta t = \Delta x \ (1/U),$$

wobei $\Delta x$ der Abstand zwischen Sende- und Empfangsdraht ist.

Ein aus dem Prospekt "Probes for hot-wire anemometry" der Firma Dantec Measurement Technlogy A/S, Dänemark, bekannter Sensor weist einen Sende- und Empfangsdraht auf, der zur Vermeidung von Wärmeverlusten jeweils auf den Spitzen zweier in den Gasstrom ragender Zinken montiert ist. Die Montage des Sende- bzw. Empfangsdrahts auf den Spitzen der Zinken ist schwierig. Der Abstand zwischen dem Sende- und Empfangsdraht kann bei solchen Sensoren kaum reproduzierbar eingestellt werden. Sie müssen deshalb vor ihrem Einsatz kalibriert werden. Jeder Sensor besitzt seine spezifische Kalibrierkurve. Die Auswerteelektronik muß auf jeden Sensor neu abgestimmt werden.

Weitere Sensoren sind aus der DE 196 09 823 A1 und der DE 28 45 661 C2 bekannt. Die Herstellung und/oder Montage dieser Sensoren ist aufwendig.

Mosse C. A. et al.: "MICROPROCESSOR-BASED TIME-OF-FLIGHT RESPIROMETER", MEDICAL AND BIOLOGICAL ENGINEERING AND COMPUTING, GB, PETER PEREGRINUS LTD. STEVENAGE, Bd. 25, Nr. 1, 1987 offenbart einen Sensor, bei dem eine mit einem Durchbruch versehene Platine an ihrer Oberseite in der Nähe des Rands des Durchbruchs zwei einander gegenüberliegende erste Kontaktelemente und auf ihrer Unterseite in der Nähe des Rands des Durchbruchs zwei einander gegenüberliegende zweite Kontaktelemente aufweist und ein den Durchbruch überspannender erster Draht mit den ersten Kontaktelementen und ein den Durchbruch überspannender zweiter Draht mit den zweiten Kontaktelementen verbunden ist.

Aufgabe der Erfindung ist es, einen einfach und kostengünstig herstellbaren Sensor zur thermischen Messung der Strömurgsgeschwindigkeit anzugeben. Der Sensor soll nach einem weiteren Ziel der Erfindung mit hoher Genauigkeit reproduzierbar sein und möglichst nicht individuell kalibriert werden müssen.

Diese Aufgabe wird durch die Merkmale der Ansprüche 1 und 13 gelöst. Zweckmäßig Ausgestaltungen ergeben sich aus der Merkmalen der Ansprüche 2 bis 12 und 14 bis 15.

Der Sensor ist einfach und kostengünstig herstellbar. Die zeitraubende und schwierige Montage des Sendedrahts bzw. ersten Drahts und des Empfangsdrahts bzw. zweiten Drahts auf den Spitzen der Zinken entfällt. Der Sensor kann automatisiert und kostengünstig gefertigt werden. Der Abstand der beiden Drähte ist mit hoher Genauigkeit reproduzierbar. Auf eine individuelle Kalibrierung solchermaßen hergestellter Sensoren kann verzichtet werden.

Der erste und/oder zweite Draht hat zweckmäßigerweise einen Durchmesser von 5 - 25$\mu$m, vorzugsweise von 12,5$\mu$m. Ein solcher Draht läßt sich automatisiert kontaktieren.

Nach einem Ausgestaltungsmerkmal weisen die Kontaktelemente den Durchbruch abschnittsweise umgebende Ringsegmente auf, wobei sie vorteilhafterweise zwei erste parallel zueinander orientierte Nuten aufweisen. Sie weisen zwei weitere Nuten auf, die mit den ersten Nuten einen Winkel von 25 - 45°, vorzugsweise von 35°, bilden. Mit der vorgeschlagenen Ausgestaltungsform gelingt es besonders leicht, den Draht mit einer vorgegebenen Zugspannung zu montieren. Damit wird eine für eine hohe Meßgenauigkeit erforderliche Geradlinigkeit des Drahts erreicht. Die Zugspannung kann insbesondere durch die in einem Winkel angeordneten zweiten Nuten aufrechterhalten werden, weil der Draht in diesem Fall mit reibschlüssiger Unterstützung gehalten wird.

Zweckmäßigerweise sind die die zweiten Nuten begrenzenden Kontaktflächen jeweils über eine erste Leiterbahn mit einem der Ringsegmente verbunden. Jedes der Kontaktelemente kann über eine zweite Leiterbahn mit einer Kontaktstelle verbunden werden. Die Kontaktstellen können Durchbrüche zur Kontaktierung von Drähten aufweisen. Die vorgeschlagene Strukturierung der Leiterbahnen ermöglicht in der Praxis eine einfach durchzuführende und fehlerfreie Herstellung der erfindungsgemäßen Sensoren.

Es hat sich als zweckmäßig erwiesen, daß die Platine eine Länge von 17 - 23mm, vorzugsweise von 20mm, eine Breite von 5 - 10mm, vorzugsweise von 7mm und eine Dicke von 1 - 3mm, vorzugsweise von 1,5mm, aufweist. Der Durchbruch kann einen Durchmesser von 2 - 5mm, vorzugsweise von 3mm, haben. Der Abstand zwischen dem ersten und dem zweiten Draht ist zweckmäßigerweise kleiner als 3mm, vorzugsweise etwa 1,5mm. Ein Sensor mit den vorgenannten Dimensionen eignet sich universell zur Messung der Geschwindigkeit einer Gasströmung.

Die zweiten Kontaktelemente können spiegelbildlich zu den ersten Kontaktelementen ausgebildet sein. Als Spiegelfläche wird in diesem Zusammenhang die große Mittelebene der Platine angesehen.

Stromaufwärts und/oder stromabwärts des Durchbruchs kann ein konisch sich erweiternder Rohrabschnitt vorgesehen sein. Der Rohrabschnitt schließt sich vorzugsweise unmittelbar an die Platine an, wobei sein kleinerer Durchmesser zur Platine gewandt ist. Durch die konische Form der Rohrabschnitte wird der Gasstrom beschleunigt. So können auch noch sehr kleine Gasströmungsgeschwindigkeiten gemessen werden. Außerdem eignet sich ein solchermaßen ausgestalteter Sensor auch zur exakten Messung von kleinen Volumenströmen. Schließlich dienen die konischen Rohrabschnitte dem Schutz der Drähte vor mechanischer Zerstörung.

Nach weiterer Maßgabe der Erfindung ist ein Verfahren zur Herstellung des erfindungsgemäßen Sensors vorgesehen, wobei der erste Draht in die ersten und zweiten Nuten des ersten Kontaktelements eingelegt, mit einer vorgegebenen Zugspannung beaufschlagt, nachfolgend kontaktiert und unter Aufrechterhaltung der Zugspannung montiert, und wobei der zweite Draht in die ersten und zweiten Nuten des zweiten Kontaktelements eingelegt, mit einer vorgegebenen Zugspannung beaufschlagt, nachfolgend kontaktiert und unter Aufrechterhaltung der Zugspannung montiert wird.

Es ist selbstverständlich auch möglich, mehrere parallel nebeneinander angeordnete erste und zweite Nuten an dem ersten und zweiten Kontaktelement zur Aufnahme mehrerer nebeneinander angeordneter erster und zweiter Drähte vorzusehen. Solche Anordnungen können für bestimmte Meßanforderungen zweckmäßig sein.

Nach einer Alternative ist ein Verfahren zur Herstellung eines erfindungsgemäßen Sensors vorgesehen, wobei

a) eine Vielzahl von ersten Kontaktelementen (3) nebeneinander auf einer Oberseite und eine Vielzahl von zweiten Kontaktelementen auf einer Unterseite einer Platinenplatte hergestellt werden,

b) ein erster Draht (4) über die Vielzahl der in den ersten Kontaktelementen (3) gebildeten ersten und zweiten Nuten gelegt und mit einer vorgegebenen Zugspannung beaufschlagt wird,

c) nachfolgend kontaktiert wird,

d) ein zweiter Draht (10) über die Vielzahl der in den zweiten Kontaktelementen gebildeten ersten und zweiten Nuten gelegt und mit einer vorgegebenen Zugspannung beaufschlagt wird und

e) nachfolgend kontaktiert wird.

Das erleichtert die Aufrechterhaltung einer angelegten Zugspannung.

Bei beiden Verfahrensvarianten ist es vorteilhaft, den ersten und den zweiten Draht mit den ersten bzw. zweiten Kontaktelementen zu verlöten. Die Platine bzw. Platinenplatte kann nach der Kontaktierung des ersten Drahts um 180° gedreht und dann der zweite Draht mit den zweiten Kontaktelementen in Kontakt gebracht werden. Dadurch können weiter die Herstellungskosten gesenkt werden, weil nur eine Vorrichtung zur Zuführung von Draht sowie zu dessen Kontaktierung benötigt wird. Es ist hier das Vorsehen erster und zweiter Nuten möglich, jedoch nicht unbedingt erforderlich.

Bei der zweiten Verfahrensvariante wird die Platinenplatte nach der Kontaktierung des ersten und des zweiten Drahts zweckmäßigerweise in einzelne Platinen teilt. Das Teilen der Platinenplatte in die einzelnen Platinen kann durch Brechen an vorgegebenen Sollbruchstellen oder durch Schneiden mittels geeigneter Schneidvorrichtungen erfolgen.

Die vorgeschlagenen Verfahren können einfach automatisiert werden. Es können hohe Stückzahlen kostengünstig hergestellt werden.

Nachfolgend wird anhand der Zeichnung ein Ausführungsbeispiel der Erfindung näher erläutert. Hierin zeigen

Fig.1      eine Platine in Draufsicht und

Fig. 2     eine schematische Schnittansich eines Durchfluß- sensors.

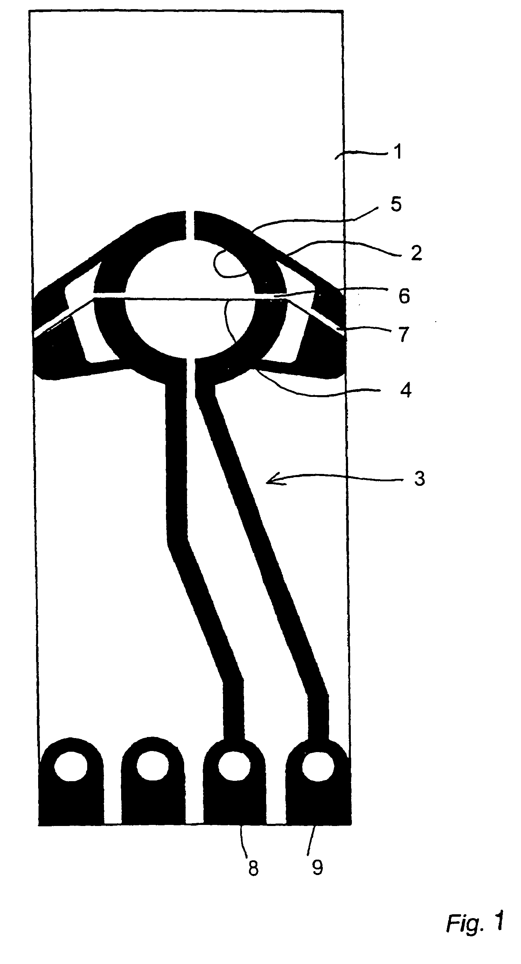

Die in Fig. 1 gezeigte Platine 1 weist einen Durchbruch 2 auf. In der Nähe des Rands des Durchbruchs 2 sind auf der hier gezeigten Oberseite der Platine 1 erste Kontaktelemente 3 angeordnet. Es handelt sich dabei um Strukturen, welche in herkömmlicher Weise durch Ätztechnik hergestellt worden sind. Auf der (hier nicht gezeigten) Unterseite der Platine 1 sind in spiegelbildlicher Anordnung und Ausgestaltung zweite (hier nicht gezeigte) Kontaktelemente vorgesehen.

Ein erster Draht 4 mit einem Durchmesser von z.B. 15 $\mu$m überspannt den Durchbruch 2. Der Durchbruch 2 dient dem Durchtritt der zu messenden Gasströmung. Er ist von Ringsegmenten 5 der ersten Kontaktelemente 3 umgeben. Die ersten Kontaktelemente 3 weisen zwei erste parallel zueinander orientierte Nuten 6 auf. In einem Abstand davon sind beidseits zweite Nuten 7 vorgesehen, die mit den ersten Nuten 6 einen Winkel von etwa 35° bilden. Kontaktflächen K begrenzen die zweiten Nuten 7. Jede der Kontaktflächen K ist über eine erste Leiterbahn L1 mit einem der Ringsegmente 5 verbunden. Zwei mit einem Abstand voneinander angeordnete nebeneinander liegende Ringsegmente 5 sind jeweils über zweite Leiterbahnen L2 mit Kontaktstellen 8, 9 verbunden.

Der erste Draht 4 ist im Bereich der ersten 6 und/oder zweiten Nuten 7 mit den ersten Kontaktelementen 3 mittels einer Lötstelle (hier nicht gezeigt) elektrisch leitend verbunden. Kontaktstellen 8, 9 dienen dem Anschluß des Sensors an eine geeignete Auswerteschaltung. Sie können einen Durchbruch zur Durchführung eines Drahts aufweisen.

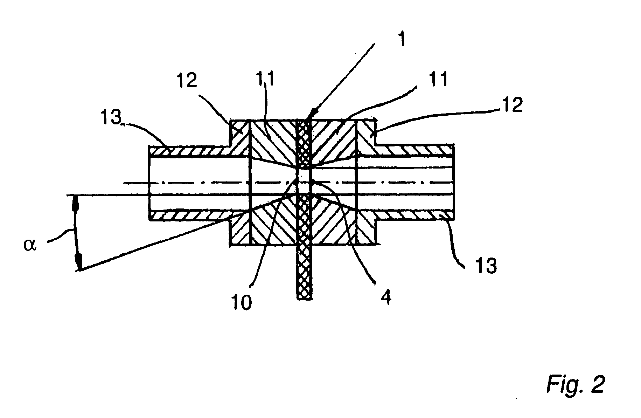

In Fig. 2 ist ein Durchflußsensor gezeigt. Stromaufwärts des ersten Drahts 4 und stromabwärts des zweiten Drahts 10 sind jeweils konisch sich erweiternde Rohrabschnitte 11 angebracht. Diese liegen jeweils mit ihrer kleinen Öffnung unmittelbar an der Platine 1 an. Stromaufwärts bzw. stromabwärts liegt an jedem der Rohrabschnitte 11 ein Flansch 12 eines Rohrs 13 an. Ein Konizitätswinkel α beträgt zwischen 5 und 20°, vorzugsweise 14°. Die konischen Rohrabschnitte 11 und die Rohre 13 sind zweckmäßigerweise aus spritzgegossenem Kunststoff hergestellt.

Nach einem weiteren hier nicht gezeigten Ausführungsbeispiel sind die ersten Kontaktelemente 3 der Oberseite nicht spiegelbildlich zu denen der Unterseite angeordnet. Die Kontaktelemente sind so ausgeführt, daß der an der Oberseite vorgesehene Draht senkrecht zum an der Unterseite angebrachten Draht steht. Diese gekreuzte Anordnung der Drähte ist vor allem dann von Vorteil, wenn im praktischen Einsatz des Sensors eine Verkippung desselben in bezug zum Strömungsvektor der zu messenden Strömung oder eine Änderung des Strömungsvektors nicht ausgeschlossen werden kann. Wegen der Kreuzung der Drähte ist hier immer sichergestellt, daß das gesendete Heizsignal vom Empfangsdraht aufgefangen wird. Bei der parallelen Anordnung der Drähte kann es dagegen insbesondere bei hohen Strömungsgeschwindigkeiten vorkommen, daß bei einer schrägen Anströmung des Sensors das Heizsignal nicht vom Empfangsdraht aufgefangen wird.

Zur Herstellung des Sensors wird nach einer ersten Verfahrensvariante zunächst auf der Oberseite der Platine 1 der erste Draht 4 in die ersten 6 und zweiten Nuten 7 eingelegt und mit einer vorgegebenen Zugspannung beaufschlagt. Dann wird der erste Draht 4 mittels Löten mit den ersten Kontaktelementen 3 verbunden. Nachfolgend kann die Platine 1 um 180° gedreht und der vorbeschriebene Verfahrensablauf zur Befestigung des zweiten Drahts 10 nochmals wiederholt werden.

Nach einer zweiten Verfahrensvariante sind auf einer Oberseite einer Platinenplatte mittels Ätztechnik nebeneinander eine Vielzahl erster Kontaktelemente 3 hergestellt. Es können mehrere Zeilen solcher nebeneinander angeordneter erster Kontaktelemente auf der Oberseite der Platinenplatte vorgesehen sein. Auf der Unterseite der Platinenplatte sind in entsprechender Ausbildung nebeneinander jeweils eine Vielzahl zweiter Kontaktelemente mittels Ätztechnik hergestellt. Auch hier können mehrere Zeilen zweiter Kontaktelemente vorgesehen sein. Die ersten und zweiten Kontaktelemente sind so angeordnet, daß der erste bzw. zweite Draht über die gesamte Breite bzw. Länge der Platinenplatte gelegt und mit einer vorgegebenen Zugspannung beaufschlagt werden kann. Es kann auch sein, daß der erste und/oder zweite Draht in im ersten und/oder zweiten Kontaktelement gebildete erste ggf. zweiten Nuten gelegt wird. So kann eine vorgegebene Zugspannung über eine Vielzahl von Kontaktelementen in geeigneter Weise aufrecht erhalten werden. Nachfolgend kann der erste bzw. zweite Draht jeweils mit den ersten und zweiten Kontaktelementen durch Löten kontaktiert werden. Mit dem vorgeschlagenen Verfahren kann eine Vielzahl erster bzw. zweiter Kontaktelemente simultan kontaktiert werden. Nach der Kontaktierung der Kontaktelemente wird zur Herstellung der einzelnen Platinen die Platinenplatte geschnitten.

Anschließend werden die konisch sich verjüngenden Rohrabschnitte 11 mit ihren kleineren Öffnungen am Durchbruch 2 der Platine 1 angebracht. Diese Anordnung kann dann insgesamt in einem aus zwei (hier nicht gezeigte) Kunststoffhalbschalen bestehenden Gehäuse aufgenommen werden. Die Kunststoffhalbschalen liegen mit daran angeformten Rohren 13 jeweils dicht an der größeren Öffnung der Rohrabschnitte 11 an. Die Kuststoffhalbschalen sind zur einfachen Montage mittels einer Rastverbindung miteinander verbindbar. Die Kunststoffhalbschalen können einstückig mit den Rohren 13 und den konisch sich verlängernden Rohrabschnitten 11 ausgebildet sein.

Auf diese Weise können einfach Sensoren zur Messung der Strömungsgeschwindigkeit von Gasen hergestellt werden, bei denen der Abstand der Drähte 4, 10 sehr gut reproduzierbar ist. Auf eine Kalibrierung solcher Sensoren kann verzichtet werden.

Bezugszeichenliste

| | |
|---|---|
| 1 | Platine |
| 2 | Durchbruch |
| 3 | erste Kontaktelemente |
| 4 | erster Draht |
| 5 | Ringsegment |
| 6 | erste Nut |
| 7 | zweite Nut |
| 8, 9 | Kontaktstellen |
| 10 | zweiter Draht |
| 11 | konischer Rohrabschnitt |
| 12 | Flansch |
| 13 | Rohr |
| L1 | erste Leiterbahn |
| L2 | zweite Leiterbahn |
| K | Kontaktfläche |

**Patentansprüche**

1. Sensor zur Messung der Strömungsgeschwindigkeit von Gasen, mit einer mit einem Durchbruch (2) versehenen Platine (1), die an ihrer Oberseite in der Nähe des Rands des Durchbruchs (2) bezüglich des Durchbruchs (2) in einander gegenüberliegender Anordnung zwei erste Kontaktelemente (3) und auf ihrer Unterseite in der Nähe des Rands des Durchbruchs (2) bezüglich des Durchbruchs (2) in einander gegenüberliegender Anordnung zwei zweite Kontaktelemente aufweist, und wobei ein den Durchbruch (2) überspannender erster Draht (4) mit den ersten Kontaktelementen (3) und ein den Durchbruch (2) überspannender zweiter Draht (10) mit den zweiten Kontaktelementen verbunden ist,
**dadurch gekennzeichnet, dass**
die Kontaktelemente (3) zwei parallel zueinander orientierte erste Nuten (6) sowie zwei in einem Winkel von 25° bis 45° zur den ersten Nuten (6) angeordnete zweite Nuten (7) aufweisen, so dass bei der Herstellung des Sensors der erste Draht (4) in die ersten (6) und zweiten Nuten (7) des ersten Kontaktelements (3) eingelegt, mit einer vorgegebenen Zugspannung beaufschlagt, nachfolgend kontaktiert und unter Aufrechterhaltung der Zugspannung montiert werden kann, und wobei der zweite Draht in die ersten und zweiten Nuten des zweiten Kontaktelements eingelegt, mit der vorgegebenen Zugspannung beaufschlagt, nachfolgend kontaktiert und unter Aufrechterhaltung der Zugspannung montiert werden kann.

2. Sensor nach Anspruch 1, wobei der erste (4) und/ oder zweite (10) Draht einen Durchmesser von etwa 5 - 25μm, vorzugsweise von 12,5μm, hat.

3. Sensor nach einem der vorhergehenden Ansprüche, wobei die Kontaktelemente (3) den Durchbruch (2) abschnittsweise umgebende Ringsegmente (5) aufweisen.

4. Sensor nach einem der vorhergehenden Ansprüche, wobei der erste (4) und der zweite Draht (10) gekreuzt angeordnet sind.

5. Sensor nach einem der vorhergehenden Ansprüche, wobei die zweiten Nuten (7) mit den ersten Nuten (6) einen Winkel von 35° bilden.

6. Sensor nach einem der vorhergehenden Ansprüche, wobei die die zweiten Nuten (7) begrenzenden Kontaktfläche (K) jeweils über ein erste Leiterbahn (L1) mit einem der Ringsegmente (5) verbunden sind.

7. Sensor nach einem der vorhergehenden Ansprüche, wobei jedes der Kontaktelemente (3) über eine zweite Leiterbahn (L2) mit einer Kontaktstelle (8, 9) verbunden ist.

8. Sensor nach einem der vorhergehenden Ansprüche, wobei die Platine (1) eine Länge von 17 - 23mm, vorzugsweise von 20mm, eine Breite von 5 - 10mm, vorzugsweise von 7mm, und eine Dicke von 1 - 3mm, vorzugsweise von 1,5mm, aufweist.

9. Sensor nach einem der vorhergehenden Ansprüche, wobei der Durchbruch (2) einen Durchmesser von 2 - 5 mm, vorzugsweise von 3 mm, hat.

10. Sensor nach einem der vorhergehenden Ansprüche, wobei der Abstand zwischen dem ersten (4) und dem zweiten Draht (10) kleiner als 3mm, vorzugsweise etwa 1,5mm, ist.

11. Sensor nach einem der vorhergehenden Ansprüche, wobei die zweiten Kontaktelemente spiegelbildlich zu den ersten Kontaktelementen (3) ausgebildet sind.

12. Sensor nach einem der vorhergehenden Ansprüche, wobei stromaufwärts und/oder stromabwärts des ersten Drahts (4) ein konisch sich erweiternder Rohrabschnitt (11) vorgesehen ist.

13. Verfahren zur Herstellung eines Sensors nach einem der vorhergehenden Ansprüche, wobei der erste Draht (4) in die ersten (6) und zweiten Nuten (7) der ersten Kontaktelemente (3) eingelegt, mit einer vorgegebenen Zugspannung beaufschlagt, nachfolgend kontaktiert und unter Aufrechterhaltung der Zugspannung montiert, und wobei der zweite Draht in die ersten und zweiten Nuten der zweiten Kontaktelemente eingelegt, mit der vorgegebenen Zugspannung beaufschlagt, nachfolgend kontaktiert und unter Aufrechterhaltung der Zugspannung montiert wird.

14. Verfahren nach Anspruch 13, wobei der erste (4) und der zweite Draht (10) mit den ersten (3) bzw. zweiten Kontaktelementen verlötet wird.

15. Verfahren nach einem der Ansprüche 13 oder 14, wobei die Platine (1) nach der Kontaktierung des ersten Drahts (4) um 180° gedreht und dann der zweite Draht (10) mit den zweiten Kontaktelementen in Kontakt gebracht wird.

**Claims**

1. Sensor for measuring the flow velocity of gases comprising a printed-circuit board (1) provided with a breakthrough (2), wherein the printed circuit board has two first contact elements (3) on its upper side close to the edge of the breakthrough (2) in opposite arrangement with respect to the breakthrough (2) and two second contact elements on its underside close to the edge of the breakthrough (2) in opposite arrangement with respect to the breakthrough (2), and wherein a first wire (4) spanning the breakthrough (2) is connected to the first contact elements (3) and a second wire (10) spanning the breakthrough (2) is connected to the second contact elements,

**characterized in that**

the contact elements (3) have two first grooves (6) oriented parallel to each other as well as two second grooves (7), which form an angle of 25 to 45° with the first grooves (6) so that, during production of the sensor, the first wire (4) may be placed into the first (6) and second grooves (7) of the first contact element (3), subjected to a predetermined tensile stress, subsequently contacted, and mounted while maintaining the tensile stress, and wherein the second wire may be placed into the first and second grooves of the second contact element, subjected to the predetermined tensile stress, subsequently contacted, and mounted while maintaining the tensile stress.

2. Sensor according to claim 1, wherein the first wire (4) and/or the second wire (10) have a diameter of approximately 5 - 25 $\mu$m, preferably of 12.5 $\mu$m.

3. Sensor according to one of the preceding claims, wherein the contact elements (3) have ring segments (5) surrounding the breakthrough (2) in sections.

4. Sensor according to one of the preceding claims, wherein the first wire (4) and the second wire (10) are crossed.

5. Sensor according to one of the preceding claims, wherein the second grooves (7) form an angle of 35° with the first grooves (6).

6. Sensor according to one of the preceding claims, wherein the contact surfaces (K) bounding the second grooves (7) are connected in each case to one of the ring segments (5) via a first conductor track (L1).

7. Sensor according to one of the preceding claims, wherein each of the contact elements (3) is connected to a contact pad (8, 9) via a second conductor track (L2).

8. Sensor according to one of the preceding claims, wherein the printed-circuit board (1) has a length of 17 - 23 mm, preferably of 20 mm, a width of 5 - 10 mm, preferably of 7 mm, and a thickness of 1 - 3 mm, preferably of 1.5 mm.

9. Sensor according to one of the preceding claims, wherein the breakthrough (2) has a diameter of 2 - 5 mm, preferably of 3 mm.

10. Sensor according to one of the preceding claims, wherein the distance between the first wire (4) and the second wire (10) is less than 3 mm, preferably approximately 1.5 mm.

11. Sensor according to one of the preceding claims, wherein the second contact elements are formed mirror-invertedly in relation to the first contact elements (3).

12. Sensor according to one of the preceding claims, wherein a conically widening tube portion (11) is provided upstream and/or downstream of the first wire (4).

13. Method for producing of a sensor according to one of the preceding claims, wherein the first wire (4) is placed into the first (6) and second grooves (7) of the first contact elements (3), subjected to a predetermined tensile stress, subsequently contacted, and mounted while maintaining the tensile stress, and wherein the second wire is placed into the first and second grooves of the second contact elements, subjected to the predetermined tensile stress, subsequently contacted, and mounted while maintaining the tensile stress.

14. Method according to claim 13, wherein the first wire (4) and the second wire (10) are soldered to the first (3) and second contact elements, respectively.

15. Method according to one of claims 13 or 14, wherein the printed-circuit board (1) is turned by 180° after the electrical bonding of the first wire (4) and the second wire (10) is then brought into contact with the second contact elements.

**Revendications**

1. Capteur pour la mesure de la vitesse de flux de gaz, avec une carte imprimée (1) comportant une ouverture (2), qui présente sur sa face supérieure à proximité du bord de l'ouverture (2) deux premiers éléments de contact (3) disposés de manière opposée par rapport à l'ouverture (2) et sur sa face inférieure à proximité du bord de l'ouverture (2) deux deuxièmes éléments de contact disposés de manière opposée par rapport à l'ouverture (2), et où un premier fil (4) tendu au-dessus de l'ouverture (2) est relié aux premiers éléments de contact (3) et un deuxième fil (10) tendu au-dessus de l'ouverture (2) est relié aux deuxièmes éléments de contact,

**caractérisé en ce que**

les éléments de contact (3) présentent deux premières rainures (6) orientées parallèlement les unes par rapport aux autres ainsi que deux deuxièmes rainures (7) disposées selon un angle compris entre 25 et 45° par rapport aux premières rainures (6) de façon que, lors de la fabrication du capteur, le premier fil (4) puisse être inséré dans les premières (6) et les deuxièmes rainures (7) du premier élément de contact (3), être soumis à un effort de tension prédéfini, être raccordé consécutivement, être monté en maintenant l'effort de tension, et où le deuxième fil peut être inséré dans les premières et deuxièmes rainures du deuxième élément de contact, être soumis à l'effort de tension prédéfini, être raccordé consécutivement, être monté en maintenant l'effort de tension.

2. Capteur selon la revendication 1, où le premier (4) et/ou le deuxième (10) fil a un diamètre compris approximativement entre 5 et 25 $\mu$m, de préférence de 12,5 $\mu$m.

3. Capteur selon l'une des revendications précédentes, où les éléments de contact (3) présentent des segments annulaires (5) entourant partiellement l'ouverture (2).

4. Capteur selon l'une des revendications précédentes, où le premier (4) et le deuxième fil (10) sont croisés.

5. Capteur selon l'une des revendications précédentes, où les deuxièmes rainures (7) forment un angle de 35° avec les premières rainures (6).

6. Capteur selon l'une des revendications précédentes, où les surfaces de contact (K) délimitant les deuxièmes rainures (7) sont reliées respectivement à un des segments annulaires (5) via une première piste conductrice (L1).

7. Capteur selon l'une des revendications précédentes, où chacun des éléments de contact (3) est relié à un point de contact (8, 9) via une deuxième ligne conductrice (L2).

8. Capteur selon l'une des revendications précédentes, où la carte imprimée (1) présente une longueur comprise entre 17 et 23 mm, de préférence de 20 mm, une largeur comprise entre 5 et 10 mm, de préférence de 7 mm, et une épaisseur comprise entre 1 et 3 mm, de préférence de 1,5 mm.

9. Capteur selon l'une des revendications précédentes, où l'ouverture (2) a un diamètre compris entre 2 et 5 mm, de préférence de 3 mm.

10. Capteur selon l'une des revendications précédentes, où la distance entre le premier (4) et le deuxième fil (10) est inférieure à 3 mm, de préférence de 1,5 mm approximativement.

11. Capteur selon l'une des revendications précédentes, où les deuxièmes éléments de contact sont réalisés de manière inversée par rapport aux premiers éléments de contact (3).

12. Capteur selon l'une des revendications précédentes, où un segment de conduit (11) qui se développe coniquement est prévu en amont et/ou en aval du premier fil (4).

13. Procédé pour la fabrication d'un capteur selon l'une des revendications précédentes, où le premier fil (4) est inséré dans les premières (6) et les deuxièmes rainures (7) des premiers éléments de contact (3), soumis à un effort de tension prédéfini, raccordé consécutivement et monté en maintenant l'effort de tension, et où le deuxième fil est inséré dans les premières et deuxièmes rainures des deuxièmes éléments de contact, soumis à l'effort de tension prédéfini, raccordé consécutivement et monté en maintenant l'effort de tension.

14. Procédé selon la revendication 13, où le premier (4) et le deuxième fil (10) sont soudés avec les premiers (3) ou les deuxièmes éléments de contact.

15. Procédé selon l'une des revendications 13 ou 14, où la carte imprimée (1) est décalée de 180° après la connexion du premier fil (4) et puis le deuxième fil (10) est mis en contact avec les deuxièmes éléments de contact.

*Fig. 1*

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3234146 A1
- DE 19623323 A1
- DE 2723809 A1
- DE 19609823 A1
- DE 2845661 C2

**In der Beschreibung aufgeführte Nicht-Patentliteratur**

- MICROPROCESSOR-BASED TIME-OF-FLIGHT RESPIROMETER. **Mosse C. A. et al.** MEDICAL AND BIOLOGICAL ENGINEERING AND COMPUTING. GB, PETER PEREGRINUS LTD, 1987, vol. 25